# EUROPEAN PATENT APPLICATION

(11) **EP 1 102 497 A2**
(43) Date of publication of application: **23.05.2001**
(21) Application number: 00403079.7
(22) Date of filing: 07.11.2000
(51) Int. Cl.: H04Q 1/14, H04M 3/42

(54) **System for remotely activating telephone services**

(30) Priority: 18.11.1999 ES 9902539
(71) Applicant: ALCATEL, 75008 Paris (FR)
(72) Inventor: Gonzalez de Prado, Jose Luis, 28043 Madrid (ES); Gonzalez Vidal, Francisco, 28045 Madrid (ES); Verpooten, Luc, 2970 Schilde (BE)
(74) Representative: Lamoureux, Bernard

(57) **Abstract**

System for remotely activating telephone services whereby a subscriber pair (15-i) connected to a first line circuit (14-1), associated with a first type of telephone service, is disconnected from this first line circuit and connected to a second type of telephone service, associated with a second line circuit (14-2), by means of a switching element (17) installed on a connection point of a protection block located on an external distribution element (R2) of a main distribution frame (MDF).

The switching element (17) is actuated from the operations desk of the operator of a fixed telephone network by means of a test equipment (19) for subscriber pairs (15-1 to 15-n).

## Description

### OBJECT OF THE INVENTION

The present invention relates to a system for carrying out the remote activation and/or deactivation of at least one not basic telephone service such as any service on a digital subscriber line (xDSL, ADSL, or any other) or on the integrated services digital network (ISDN), and therefore dispensable, requested by a subscriber to a telephone network.

The subscriber requirement is answered immediately so that provisioning and/or ceasing to provide a predetermined telephone service does not have an immediate impact on the existing telephone network architecture with an external infrastructure built up over time, the immediate displacement of maintenance staff being avoided, as well as manual intervention within the scope of a distribution frame housed, generally, in a local switching exchange.

### STATE OF THE ART

In an incumbent fixed telephone network, such as a public switched telephone network PSTN, the different types of line circuits provide different types of telephone service.

Frequently, the line circuits are located in local switching exchanges, in remote concentration equipment (remote subscriber units RSU), and are connected to a plurality of subscribers via distribution frames to which subscriber pairs, one for each subscriber, are connected.

When a subscriber wishes to be connected to and/or disconnected from a determined telephone service, the operator of the telephone network has to displace a technician to the distribution frame in order that he manually disconnect the subscriber pair from the present position of the distribution frame, which corresponds to the undesired telephone service, and connect it in a position corresponding to a line circuit of the type of telephone service desired.

Presently, telephone service users can choose between various telephone operators that offer similar telephone services at different prices.

At the outset, the operator can forecast the initial penetration of a predetermined telephone service. However, his forecast can prove wrong and the outcome be very different, so that the introduction of an automatic distribution frame in the local switching exchange is not justified, since the cost of the manual changes to be carried out on the distribution frame is small in comparison with the cost of an automatic distribution frame.

The automatic distribution frame has been described, for example, in the US Patent 5,831,979 granted to Byers, incorporated in the present patent application by reference. The automatic distribution frame and the devices associated therewith are not easily installed in the local switching exchange, which already has equipment of the fixed telephone network installed.

Thus, it has become necessary to provide the incumbent fixed telephone network operator with a system that permits enabling and/or disabling different telephone services according to the penetration of the demand, without the operator having to make major investments (economy of scale) in order to effect the enlargement of the infrastructure already installed.

Once the demand has been consolidated (mature market), the operator adapts the cost of the enlargement of his telephone network to the subscriber demand. Thus, the enlargement of the infrastructure of the telephone network is carried out in a progressive manner. It is possible to make the enlargement by adding new equipment throughout the telephone network.

### CHARACTERISATION OF THE INVENTION

To overcome the problems outlined above, a system is proposed for remotely activating telephone services, for example in a local switching exchange of a public switched telephone network PSTN, which includes a first line circuit associated with a first type of telephone service, to which a subscriber pair is normally connected through a distribution frame.

When a subscriber requires to be connected to a second type of telephone service, provisioned over a second line circuit, the operator makes a temporary connection of the subscriber pair corresponding to the requesting subscriber through a switching element, which is installed in a connection position of a block associated with said subscriber pair. The block is located on an external distribution element of the distribution frame.

The operator manages and guides the switching of the switching element through test equipment. However, whilst there is a temporary connection implemented by means of the switching element associated with a subscriber pair of a block, another subscriber pair of the same block is prevented from being connected temporarily through its switching element to the second line circuit.

Later, the operator plans to make the established connection permanent in line with his criterion, with the object of altering the wiring of the automatic distribution frame in a definitive manner, in order to restore one or some of the second line circuits to a disposable condition.

Consequently, the performance of the tasks of connecting and disconnecting the different telephone services offered to the subscribers is carried out quickly, the requests are answered from an operations desk of the operator, it does not imply the immediate displacement of staff to the site of the distribution frame, the telephone network already installed adapts in a flexible manner to the penetration of new telephone services offered by the operator and it facilitates the future enlargement of the telephone network infrastructure in an optimum fashion.

### BRIEF DESCRIPTION OF THE FIGURES

A more detailed explanation of the invention is given in the following description, based on the attached figures, in which:
- figure 1 is a diagram showing the connection existing between a distribution frame and a subscriber telephone according to the invention,
- figure 2 is a diagram showing the connection of a second line circuit with a subscriber pair through a switching element according to the invention, and
- figure 3 is a diagram showing another embodiment according to the invention.

### DESCRIPTION OF THE INVENTION

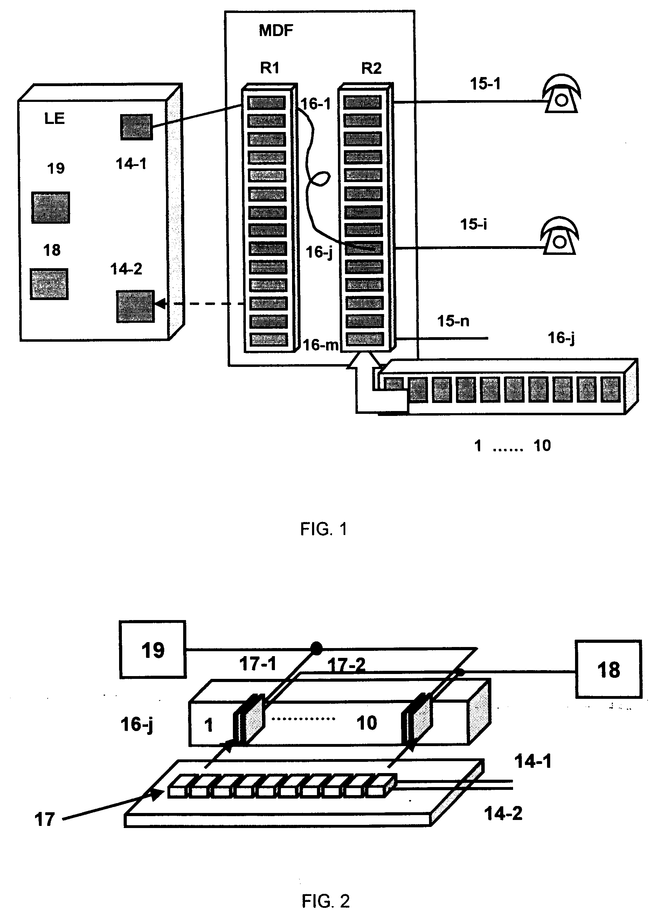

Figure 1 shows a preferred embodiment of the invention that provides an operator of a fixed incumbent telephone network, such a public switched telephone network PSTN, with a system for effecting a temporary connection and/or disconnection of a subscriber pair 15-i (where i = 1, ..., n) to a first type of line circuits 14-1, associated with a first telephone service.

A local switching exchange LE, belonging to the telephone network PSTN, includes a plurality of the first type of line circuits 14-1, which are connected via a main distribution frame MDF to the plurality of subscriber pairs 15-1 to 15-n that obtain, respectively, access to the telephone network PSTN.

The main distribution frame MDF includes an internal distribution element R1 with connection points, to one of which is connected the first line circuit 14-1, PSTN telephone network side, and an external distribution element R2 with connection points, to one of which is connected the subscriber pair 15-i, subscriber loop side. Consequently, the first line circuit 14-1 is allocated to the subscriber pair 15-i through the making of a jumper connection between the pertinent connection points of the internal distribution element R1 and of the external distribution element R2, respectively.

The connection points corresponding to the external distribution element R2 are grouped together in blocks having a predetermined number of connection points, for example, in blocks of ten.

According to a first embodiment of the invention, on the subscriber loop side each block 16-j (where j = 1, ..., m) includes a switching element 17 per each subscriber pair 15-i, as is illustrated in figure 2. The switching element 17 may be a Reed relay with mechanical latching.

The switching element 17 is employed for connecting and/or disconnecting the subscriber pair 15-i to a second line circuit 14-2, associated with a second telephone service. Activation and/or deactivation are carried out remotely and without requiring manual intervention.

Depending on the service that the subscriber requires, his subscriber pair 15-i shall be connected to the first line circuit 14-1 or to the second line circuit 14-2, this function being performed by the switching element 17.

The operator works the switching element 17 by means of the feed to the subscriber pair 15-i. That is, the switching element 17 includes a first actuation terminal 17-1 and a second actuation terminal 17-2, so that, for example, the first actuation terminal 17-1 is connected to a predetermined first voltage level and the second actuation terminal 17-2 is connected to a predetermined second voltage level.

Thus, as a function of the voltage level applied to the first actuation terminal 17-1 and to the second actuation terminal 17-2, the subscriber pair 15-i shall be connected to the first line circuit 14-1 or to the second line circuit 14-2.

The first voltage level is supplied via a test equipment 19, which serves to carry out a check of the subscriber pair 15-i. That is, the test equipment 19 is a specialised instrument for operating electrically with the subscriber pairs 15-1 to 15-n, so that the operator employs the test equipment 19 for testing purposes.

Likewise, the second voltage level is provided through an external device 18, such as an alarm, lamp or any other panel, which have available a common voltage reference level (ground). These devices are located in the local exchange LE, for example.

As a result, from an operations desk of the operator it is possible to work the switching element 17 via the test equipment 19, which shall supply the first voltage level.

Once the subscriber pair 15-i of the block 16-j is connected to the second line circuit 14-2 by means of the switching element 17, the rest of the subscriber pairs belonging to the protection block 16-j are inhibited from connecting to said second line circuit 14-2 via their corresponding switching element 17, since only a single cable is run between each block and the second line circuit 14-2.

When the connection set up is made permanent by means of the manual intervention of a technician in the main distribution frame MDF, or the subscriber wishes to be disconnected from the second telephone service, then it is possible to connect temporarily another subscriber pair 15-t of the protection block 16-j to the second line circuit 14-2 by means of its corresponding switching element 17.

In brief, it is possible to connect and/or disconnect a subscriber pair 15-i of the protection block 16-j to the second line circuit 14-2 by means of the switching element 17. To make a connection permanent, the operator sends a technician to the main distribution frame MDF where, through manual intervention, executes a determihed connection between the pertinent connection point of the internal distribution element R1 and the corresponding connection point of the external distribution element R2, making possible the allocation of the second service to other subscriber pair 15-t of the same protection block 16-j.

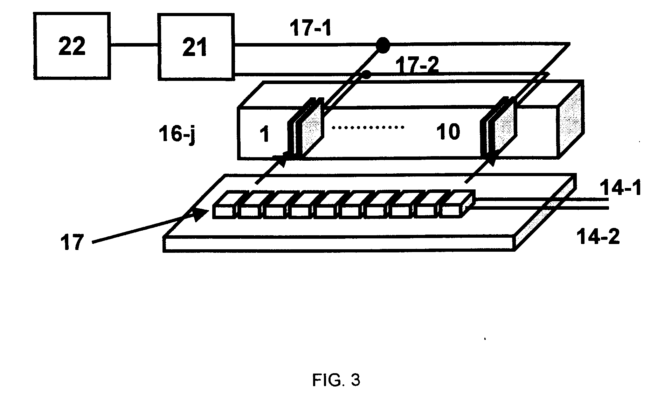

As it is shown in figure 3, it is possible to work the switching element 17 through a modem 22 that has associated a circuit 21, so that a first end of its output is connected to the first actuation terminal 17-1 and a second end of its output is connected to the second actuation terminal 17-2.

From the operations desk of the operator it is possible to route a call to the line associated with the modem 22, transmitting to it different digital codes, which are decoded in the associated circuit 21 to identify first of all the subscriber pair 15-i that it is wished to connect to and/or disconnect from the second line circuit 14-2.

According to the commands received, the associated circuit 21 produces at its outputs the first voltage level and the second voltage level for working the switching element 17, implementing a temporary connection.

Thus, it is possible to carry out quickly and remotely the connection and/or disconnection of a subscriber to a telephone service.

## Claims

1. **System for remotely activating telephone services** comprising a first line circuit (14-1) associated with a first type of telephone service, connected at least to one subscriber pair (15-i) by means of a main distribution frame (MDF) that includes an internal distribution element (R1), and an external distribution element (R2); a second line circuit (14-2) associated with a second type of telephone service; and a test equipment (19) that performs the testing of at least the subscriber pair (15-i), **characterised** in that the subscriber pair (15-i) is connected temporarily to the second line circuit (14-2) by means of a switching element (17).

2. **System for activating** according to claim 1, **characterised** in that there is one switching element (17) per subscriber pair (15-i) inside a block (16-j) that groups together a predetermined number of subscriber pairs (15-x to 15-t).

3. **System for activating** according to claim 2, **characterised** in that the block (16-j) is included in the external distribution element (R2).

4. **System for activating** according to claim 2; **characterised** in that while the subscriber pair (15-i) belonging to the block (16-j) is connected to the second line circuit (14-2) by means of the switching element (17) associated with said subscriber pair (15-i), it inhibits the connection of another subscriber pair (15-x) belonging to the same block (16-j) to the second line circuit (14-2) by means of the switching element (17) associated with said subscriber pair (15-x).

5. **System for activating** according to claim 1, **characterised** in that the switching element (17) is switched by means of the test equipment (19).

6. **System for activating** according to claim 5, **characterised** in that the test equipment (19) provides a predetermined first voltage level to a first actuation terminal (17-1) of the switching element (17).

7. **System for activating** according to claim 6, **characterised** in that from an operations desk of an operator it is possible to control the test equipment (19) it order that it supplies the predetermined first voltage level.

8. **System for activating** according to claim 1, **characterised** in that a modem (22) is connected to the switching element (17) by means of an associated circuit (21).

9. **System for activating** according to claim 8, **characterised** in that the associated circuit (21) supplies the predetermined first voltage level to the first actuation terminal (17-1) of the switching element (17).

10. **System for activating** according to claim 9, **characterised** in that from the operations desk of the operator it is possible to route a call to the line assigned to the modem, in order to control the generation of the predetermined first voltage level on the part of the associated circuit (21).
